# EUROPEAN PATENT APPLICATION

(11) **EP 4 790 670 A1**
(43) Date of publication of application: **12.08.2026**
(21) Application number: 26150481.5
(22) Date of filing: 07.01.2026
(51) Int. Cl.: G07C 9/00, B60R 16/037, B60R 25/24, B60R 25/20

(54) **DIGITAL KEY SYSTEM**

(30) Priority: 05.02.2025 JP 2025017578
(71) Applicant: Suzuki Motor Corporation, Hamamatsu-shi, Shizuoka 432-8611 (JP)
(72) Inventor: NAKAO, Taichi, Hamamatsu-shi, 432-8611 (JP); SUNDA, Takashi, Hamamatsu-shi, 432-8611 (JP); TAKABAYASHI, Ryuichi, Hamamatsu-shi, 432-8611 (JP); SUZUKI, Yuichiro, Hamamatsu-shi, 432-8611 (JP)
(74) Representative: Plasseraud IP

(57) **Abstract**

A digital key system establishes communication between a mobile terminal for saving a set of vehicle settings and a digital key showing an association between a user and a vehicle, and an in-vehicle system for controlling a plurality of on-vehicle materials mounted on the vehicle. The mobile terminal includes a vehicle setting change means configured to change vehicle settings by the user. The in-vehicle system includes an authentication means for authenticating the digital key retrieved from the mobile terminal, and a vehicle setting applying means for applying vehicle settings to a plurality of on-vehicle materials.

## Description

### BACKGROUND OF THE INVENTION

### Field of the Invention

The present invention relates to a digital key system including a mobile terminal having a digital key used for authenticating the driver of a vehicle and for locking or unlocking doors of a vehicle, and an in-vehicle system that communicates with the mobile terminal to control on-vehicle materials.

### Description of the Related Art

Electronic keys (or smart keys), each used for locking or unlocking doors of a vehicle and for starting an engine, have come into widespread use. Mechanical keys can be embedded in electronic keys. In addition, a keyless system having a remote-control function to lock or unlock doors and to start an engine has been developed as well. Electronic keys are each configured to perform near field communication with an antenna and a receiver mounted on a vehicle using weak radio waves, thus allowing access to an in-vehicle system used to control various types of on-vehicle materials. An immobilizer aiming to prevent the theft of a vehicle can be embedded in an electronic key. The immobilizer is configured to permit an engine to start upon successfully verifying the identification information (ID) via wireless communication between an IC chip embedded in an electronic key and an in-vehicle system. Thus, it is possible to prevent the theft of a vehicle through a fraudulent operation by a third party other than a specific user.

In recent years, digital keys realized by smartphone applications have been substituted for physical keys. Digital keys mounted on smart devices such as smartphones allow drivers to access or control vehicles in cooperation with in-vehicle systems through contact-type or noncontact-type near field communications. Digital keys are designed to achieve basic operations for locking or unlocking vehicles and for starting or stopping engines without using physical keys. Digital keys can achieve car sharing that allows multiple users to share one vehicle, thus improving convenience for users. In addition, digital keys can give multiple uses the right to access vehicles and manage user settings individually. For example, it is possible to automatically adjust customization, such as positional adjustment of seats in vehicles and temperature settings of air conditioners, according to user preference. In addition, it is possible to set accessible time or a drivable area of each vehicle for each user. Furthermore, digital keys utilize encryption technology and secure communication protocols to prevent the theft of vehicles and to prevent illegal hacking from outside.

Patent Document 1 (i.e., Japanese Patent Publication No. 2024-534305) discloses the technology of applying personal vehicle settings of any passenger in a vehicle to an in-vehicle system (e.g., a computer). The technology provides vehicle settings for providing safety and comfortability to any passenger in a vehicle, such as seat settings, settings of an air conditioner, audio settings, settings related to a user interface and a display, communication settings, mirror settings, and settings of a steering wheel. The technology identifies any passenger in a vehicle to generate, correct, and apply vehicle settings. The vehicle can be equipped with any communication device for WiFi communication, Bluetooth (Registered Trademark) wireless communication, near field communication (NFC), and radio frequency identifier (RFID) to detect an electronic device carried by any passenger in a vehicle. The in-vehicle system can identify any passenger in a vehicle using a user profile or an account number to apply vehicle settings associated with the user profile or the account number activated for an arbitrary passenger. The passenger in a vehicle may correct and apply vehicle settings using a conditional modifier associated with personalized vehicle settings.

As methods for saving vehicle settings personalized for each driver, it is possible to employ a method for saving the state of settings related to various on-vehicle materials such as power seats and electric mirrors in in-vehicle units inside a vehicle and another method for saving the state of settings in a server outside of a vehicle. As in-vehicle units, it is possible to use electronic control units (ECUs) connected to an in-vehicle network such as CAN (Controller Area Network). To save vehicle settings in in-vehicle units, for example, a driver may apply desired vehicle settings to an in-vehicle system by operating switches mounted on a vehicle. Alternatively, it is possible to apply vehicle settings to an in-vehicle system upon identifying the identification information of a remote-control key held by a driver. When vehicle settings are saved in a server, it is possible to download the vehicle information from a server to an in-vehicle system by way of a driver's operation to operate a multimedia screen displayed on an on-vehicle display (e.g., a touch panel display) or to operate a head unit viewed by a driver.

Saving vehicle settings in in-vehicle units may not capacitate a driver to change vehicle settings from the outside of a vehicle. The technology of Patent Document 1 allows for correction of personalized vehicle settings using a conditional modifier; however, the technology does not allow a driver to arbitrarily change vehicle settings from the outside of a vehicle. In addition, the increased number of profiles saved as vehicle settings might eventually increase the storage capacity of in-vehicle units, thus raising the manufacturing cost of a vehicle.

When vehicle settings are downloaded from a server to an in-vehicle system, it takes a long time such as several tens of seconds to start an in-vehicle communication device after the start of an engine or a power-on event. For this reason, it may take a long time to apply vehicle settings to an in-vehicle system after a driver gets in a vehicle.

Normally, an in-vehicle system will hold vehicle settings applied thereto in an ignition-off (IG OFF) event to stop the engine of a vehicle. When the owner gets in a vehicle after an ignition-off event, it is necessary to change vehicle settings held by an in-vehicle system to owner's own vehicle settings. Therefore, troublesome operations may be needed to change vehicle settings for each driver, which might raise a problem about a long time needed to be taken before starting a vehicle under the state of desired settings.

Multiple users carrying smart devices for saving individual digital keys may share one vehicle using multiple digital keys. In this case, it is difficult to apply vehicle settings personalized for each user to an in-vehicle system and to customize the state of setting of on-vehicle materials.

### SUMMARY OF THE INVENTION

To solve the problem described above, the present invention embodiment aims to provide a digital key system configured to save a set of a user's digital key and vehicle settings in a smart device, to allow the user to change vehicle settings using the smart device, and to customize the state of settings of on-vehicle materials.

In one aspect, the present invention is directed to a digital key system including a smart device (hereinafter, referred to as a "mobile terminal") configured to hold a digital key showing an association between a user and a vehicle, and an in-vehicle system configured to control a plurality of on-vehicle materials mounted on a vehicle. The mobile terminal is configured to store a set of a digital key and a vehicle setting used to define the state of setting with respect to a plurality of on-vehicle materials and includes a vehicle setting change means for permitting a user to change the vehicle setting and a transmitter means for transmitting the digital key and the vehicle setting to the in-vehicle system. The in-vehicle system includes a receiver means for receiving the digital key and the vehicle setting transmitted from the transmitter means of the mobile terminal, an authentication means for authenticating the digital key, and a vehicle setting applying means for applying the vehicle setting to a plurality of on-vehicle materials when the authentication means successfully authenticates the digital key.

### EFFECT OF THE INVENTION

According to the present invention embodiment, it is possible to save a set of a user's digital key and a vehicle setting in a smart device, to allow the user to change the vehicle setting in a smart device, and to customize the state of setting with respect to on-vehicle materials.

### BRIEF DESCRIPTION OF THE DRAWINGS

Fig. 1 is a block diagram illustrating the configuration of a digital key system according to the first embodiment of the present invention.
Fig. 2 is a block diagram illustrating an application example of the digital key system adapted to first method.
Fig. 3 is a block diagram illustrating an application example of the digital key system adapted to a second method.
Fig. 4 is a block diagram illustrating the configuration of a digital key system according to the second embodiment of the present invention.
Fig. 5 is a flowchart illustrating the processing of the digital key system according to the second embodiment of the present invention.

### DETAILED DESCRIPTION

A digital key system according to various embodiments of the present invention will be described below with reference to the accompanying drawings.

The present application provides some embodiments each designed to install a predetermined application in a smart device such as a smartphone and to save a digital key, which allows a user to access a vehicle and which replaces a mechanical key. Upon authenticating the digital key, it is possible to lock or unlock the door(s) of a vehicle and to turn on or off power supply. Particularly, applications implement a personalization function that allows the user to change the vehicle settings used for defining the state of settings with respect to various types of on-vehicle materials before the user gets in a vehicle, thus automatically applying the changed vehicle settings to an in-vehicle system.

The vehicle is equipped with multiple antennas for the sake of wireless communication with smart devices. The user may hold a smart device over a door mirror or a door handle of a vehicle to unlock the door, and the user may push a start switch of a vehicle; alternatively, the user may hold a smart device over the start switch to turn on power supply. After that, the user may choose to determine whether to apply vehicle settings saved in a smart device to a vehicle or not with reference to a meter display indicating the condition of meters of a vehicle. For example, it is possible to display on the meter display a prescribed form for asking the user about whether to apply vehicle settings or not, thus applying vehicle settings to a vehicle with user's approval. In addition, when one vehicle is shared between multiple users, another sharing user, other than the user as the owner of a vehicle, may attempt to apply individual vehicle settings to a vehicle. In other words, it may be necessary to switch one vehicle setting (e.g., an owner setting) ascribed to the owner of a vehicle and other vehicle settings (e.g., a guest setting) ascribed to a sharing user. For example, after the sharing user finishes driving a vehicle so that the power supply is turned off and doors are locked, it is possible to automatically switch the guest setting applied to the vehicle to the owner setting under a predetermined condition. That is, multiple vehicle settings assigned to multiple digital keys held by multiple users may be individually applied to a vehicle. Herein, it is possible to save the specific vehicle setting ascribed to the owner of a vehicle as the master information so that other vehicle settings ascribed to other users will be automatically deleted after finishing driving the vehicle.

### [1] First Embodiment

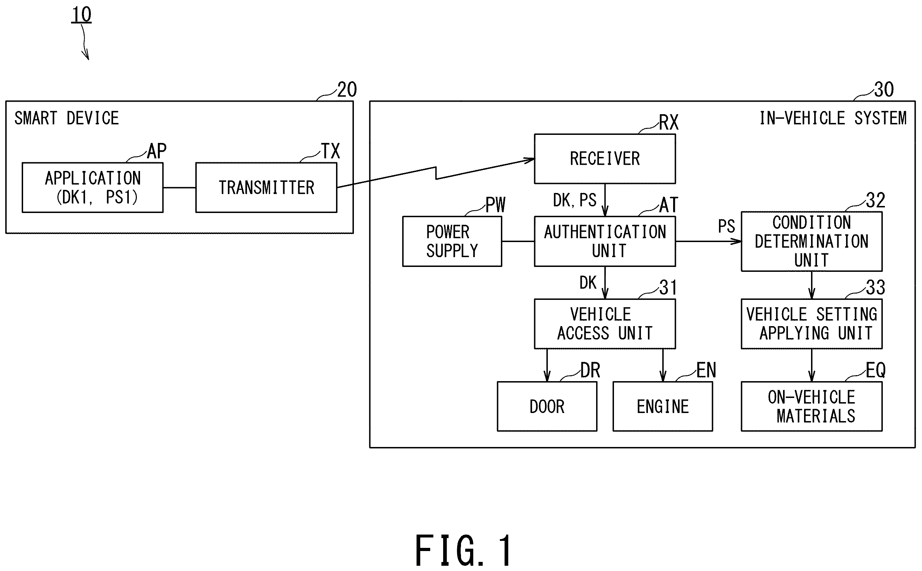

Fig. 1 is a block diagram illustrating the configuration of a digital key system 10 according to the first embodiment of the present invention. The digital key system 10 includes a smart device 20 and an in-vehicle system 30. An application AP for capacitating a user to generate and change vehicle settings is installed on the smart device 20. The in-vehicle system 30 is configured to manage the state of settings with respect to various types of on-vehicle materials EQ mounted on a vehicle.

The smart device 20 and the in-vehicle system 30 are designed to communicate with each other, for example, by establishing communication according to communication protocols such as NFC, BLE (Bluetooth Low Energy), and UWB (Ultra-Wide Band). The smart device 20 is designed to transmit or receive identification information (ID) through NFC; however, some types of smart devices cannot transmit or receive digital information. To capacitate transmission and reception of digital information, it is possible to install a combination of BLE and UWB on a vehicle. In this connection, UWB can measure the distance between a communication device possessed by a user and a vehicle using multiple antennas, and therefore it is possible to identify the user located at the closest position to a vehicle when multiple users simultaneously access the in-vehicle system 30. When UWB is used as a near field communication, it is possible to determine whether the smart device 20 already storing a digital key DK is located inside or outside a vehicle by the in-vehicle system 30. Even when the smart device 20 is located inside a vehicle, it is possible to locate the smart device 20 at the closest position to a driver's seat.

The smart device 20 includes a processor, a memory, and a wireless communication module. As the processor, CPU and/or GPU are mounted on the smart device 20. Herein, memory is not necessarily limited to semiconductor memory embedded in the smart device 20; hence, it is possible to use other storage media such as a USB (Universal Serial Bus) memory detachable from the smart device 20. As the wireless communication module, it is possible to use any device abiding by various communication protocols such as WiFi, Bluetooth (Registered Trademark), and UWB for wireless communication and data communication with external devices. The smart device 20 installs the application AP on memory. A set of the user's digital key DK and a personal vehicle setting PS (hereinafter, simply referred to as a "vehicle setting PS") indicating a vehicle setting personalized by the user is saved in a predetermined storage region secured in memory. The vehicle setting PS holds the state of settings with respect to various types of on-vehicle materials EQ determined in advance by the user.

A touch panel display is mounted on the smart device 20 and configured to display an operation screen that allows the user to generate and change vehicle settings. The operation screen is designed to display a plurality of items included in the vehicle setting PS, i.e., the state of settings with respect to various types of on-vehicle materials EQ. Therefore, the user can individually generate and change the state of settings with respect to a plurality of items displayed on the operation screen. After that, a transmitter TX shall transmit to a receiver RX of the in-vehicle system 30 the vehicle setting PS indicating the personal setting information generated or changed by the user. During the driving of a vehicle, the user might unexpectedly operate the smart device 20 to change vehicle settings. To prevent such an unexpected user's operation, it is possible to install an inhibition means on the smart device 20. That is, when a communication is established between the smart device 20 and the in-vehicle system 30 so that the vehicle setting PS is transmitted from the transmitter TX to the receiver RX, the inhibition means may be activated to automatically lock an operation screen.

Wireless communication according to various communication protocols such as NFC, BLE, and UWB is established between the transmitter TX of the smart device 20 and the receiver RX of the in-vehicle system 30. The receiver RX shall receive the digital key DK and the vehicle setting PS transmitted from the smart device 20, thus sending the received information to an authentication unit AT. A plurality of authentication methods can be installed in the authentication unit AT. For example, it is possible to install an authentication protocol of NFC and a coupling of Bluetooth (Registered Trademark).

The authentication unit AT is configured to authenticate whether a user identified by the digital key DK is associated with a vehicle or not. A single digital key DK for identifying a single user can be saved on a single smart device 20. Alternatively, it is possible to use the digital key DK for each user differently with the application AP configured to store multiple digital keys DK for identifying multiple users. In this case, the application AP may hold multiple vehicle settings PS associated with multiple digital keys DK. That is, a desired digital key DK and a desired vehicle setting PS shall be identified using a user's identification number or the like.

For example, the authentication unit AT is configured to hold user data indicating a user's attribute associated in advance with vehicle data (e.g., a vehicle type, a model, and a vehicle number). In the case that one vehicle is shared by multiple users, the authentication unit AT may hold a plurality of user data attributes of multiple users. The authentication unit AT shall decode an encrypted digital key DK to verify the authenticity of the digital key DK by assessing whether the digital key DK matches the user data or not.

Upon authenticating a user using the digital key DK, the authentication unit AT shall send the digital key DK to a vehicle access unit 31 and send the vehicle setting PS paired with the digital key DK to a condition determination unit 32. In this connection, the authentication unit AT may automatically turn on power supply PW of a vehicle by authenticating the digital key DK. Turning on the power supply PW enables an electric vehicle to start running.

Due to authentication of the digital key DK, the vehicle access unit 31 shall unlock a door DR or automatically start an engine EN. For example, the door DR of a vehicle can be unlocked using the digital key DK subjected to user authentication while the engine EN will be started by the user who manually operates the start switch. Alternatively, the user may hold the smart device 20 over the start switch to start the engine EN. To stop the engine EN, the user needs to operate the start switch or to hold the smart device 20 over the start switch.

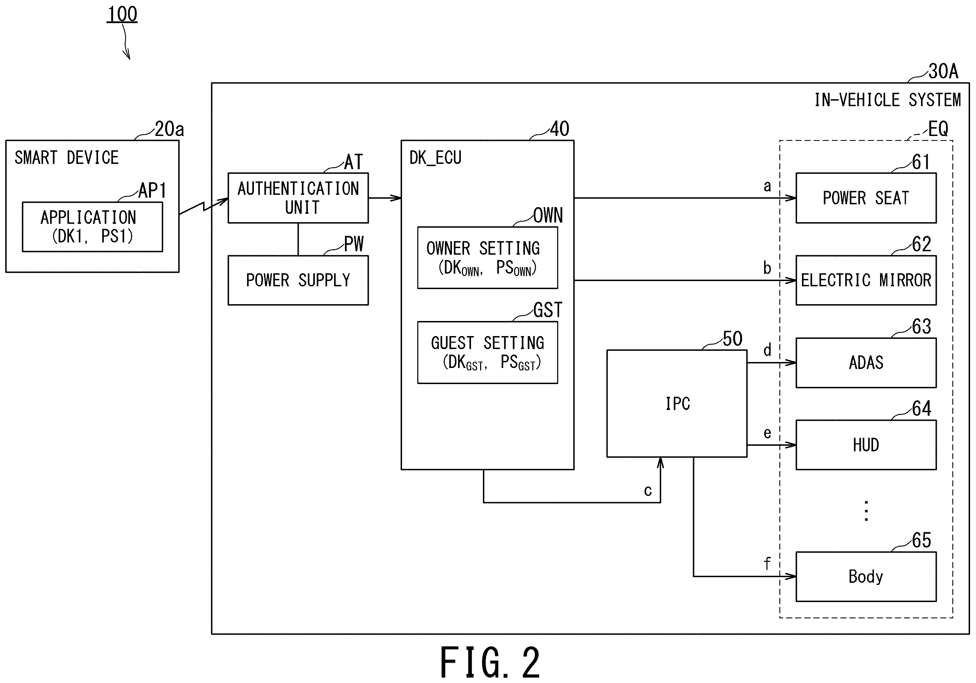

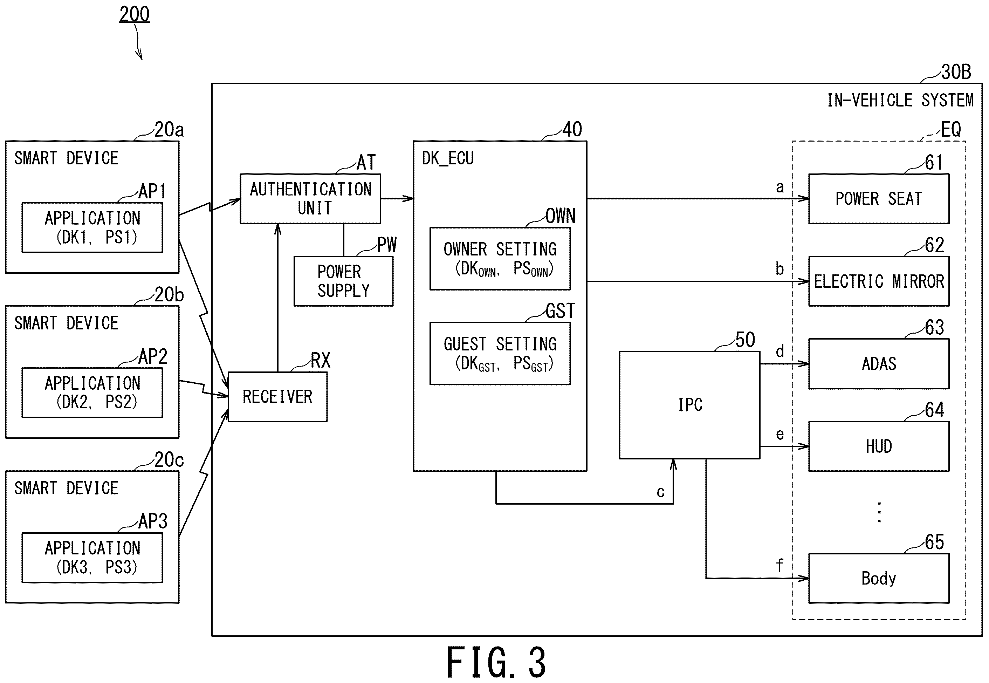

The condition determination unit 32 holds multiple conditions associated with unlock/lock of the door DR and on/off of the power supply PW, and therefore, followed by authentication of the digital key DK by the authentication unit AT, the condition determination unit 32 shall determine whether to apply the user's vehicle setting PS to the on-vehicle materials EQ or not. For example, the owner setting OWN indicating the state of settings of the on-vehicle materials EQ determined by the owner of a vehicle is stored as a default setting on memory. When a user accesses a vehicle as the owner of a vehicle, the owner setting OWN will be applied to the on-vehicle materials EQ. In addition, a vehicle setting by a share user can be stored on memory as the guest setting GST (see Figs. 2 and 3).

Upon satisfying the first condition, the condition determination unit 32 shall permit the guest setting GST of a share user, who accesses a vehicle using the smart device 20, to be applied to the on-vehicle materials EQ instead of the owner setting OWN. After that, when the share user operates the start switch of a vehicle to turn off the power supply PW or to stop the engine EN while the user locks the door DR, the state of settings of the on-vehicle materials EQ will be restored from the guest setting GST of the share user to the owner setting OWN serving as a default setting.

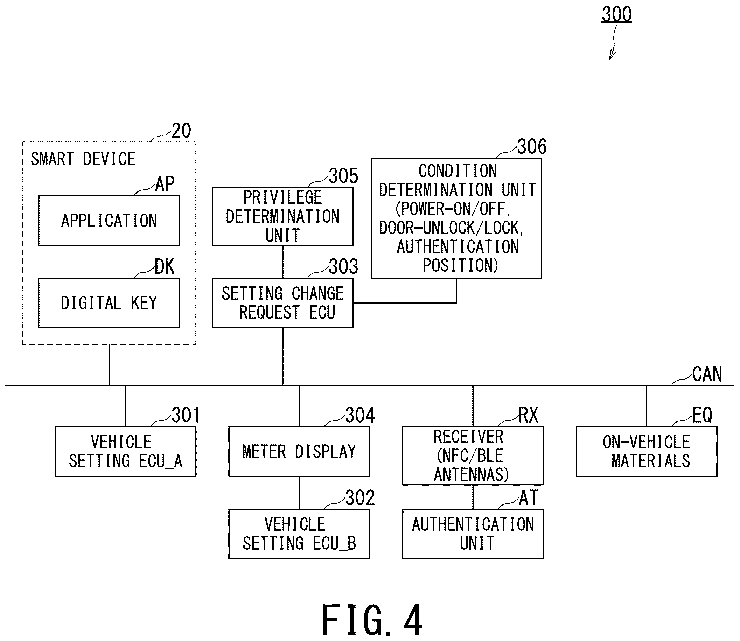

Upon satisfying the second condition, the condition determination unit 32 shall set the guest setting GST of the share user who accesses the vehicle using the smart device 20 as the new default setting. After that, the guest setting GST serving as the new default setting will be applied to the state of settings of the on-vehicle materials EQ in the vehicle. In this connection, the first condition and the second condition will be described in detail with reference to the flowchart of Fig. 4.

A vehicle setting applying unit 33 is configured to define the state of settings of the on-vehicle materials EQ according to the vehicle setting PS. When meters, a head-up display, a seat position, a side-view mirror angle, and the temperature of an air conditioner are defined as multiple items of vehicle settings, for example, it is possible to define the state of settings of the on-vehicle materials EQ associated with the state of settings of multiple items.

Artificial intelligence (AI) and machine learning functions can be installed on the application AP of the smart device 20. For example, a machine learning model having learned the past history such as attributes (e.g., ages and sexes) of multiple users, external environments (e.g., temperature, humidity, weather, and seasons) outside of vehicle, and the tendency in the driver's behavior when operating vehicles may be installed on the application AP. Alternatively, when a user frequently changes the vehicle setting PS, the machine learning model may learn the modification history of modifying the vehicle setting PS by the user as the past history. In addition, the application AP may enumerate the changed items of the vehicle setting PS recommendable responsive to the past history for each user and thereby display the changed items on the touch panel display of the smart device 20 as the reference information used for the user to change the vehicle setting PS. That is, the user can easily and accurately change the vehicle setting PS, and therefore it is possible to prevent the user's driving operation from being adversely affected due to an inappropriate modification in the vehicle setting PS.

Next, application examples of the digital key system 10 will be described with reference to Fig. 2 and Fig. 3. Fig. 1 illustrates the functional configuration of the in-vehicle system 30, while Figs. 2-3 illustrates the specific configurations of in-vehicle systems 30A and 30B. For example, a digital key ECU (DK_ECU) 40 and an interprocess communication (IPC) 50 are installed on the in-vehicle systems 30A and 30B. As the on-vehicle materials EQ, it is possible to provide a power seat 61, an electric mirror 62, an advanced driver assistance system (ADAS) 63, a head-up display (HUD) 64, and other vehicle body parts (Body) 65. In Figs. 2-3, various common parts shown in Fig. 1 will be denoted by the same or similar reference signs.

Fig. 2 illustrates the configuration of a digital key system 100 according to the first method. The digital key system 100 includes a smart device 20a and the in-vehicle system 30A. An application AP1 is installed on the smart device 20a to hold a digital key DK1 associated with the user of a vehicle and a vehicle setting PS1 personalized by the user. In the first method, after unlocking the door DR of a vehicle, turning on the power supply PW using the digital key DK1, and authenticating the digital key DK1 via NFC, the in-vehicle system 30A shall receive the vehicle setting PS1 through NFC and apply the received vehicle setting PS1 to the on-vehicle materials EQ.

When communication is established between the smart device 20a and the in-vehicle system 30A through NFC or BLE, the digital key DK1 and the vehicle setting PS1 will be transmitted from the smart device 20a to the in-vehicle system 30A. In the in-vehicle system 30A, the digital key DK is subjected to an authentication procedure of NFC. With success in authentication, the power supply PW will be turned on. In addition, the digital key DK1 and the vehicle setting PS1 will be sent to the DK_ECU 40. The DK_ECU 40 has a storage region to store the owner setting OWN and the guest setting GST. A digital key DK_{OWN} and a vehicle setting PS_{OWN} ascribed to the owner of a vehicle can be registered in the owner setting OWN, while a digital key DK_{SHR} and a vehicle setting PS_{SHR} ascribed to a share user can be registered in the guest setting GST.

When the identification information of the digital key DK1 indicates the owner of a vehicle, the digital key DK1 and the vehicle setting PS1 are saved as the owner setting OWN. In this case, the digital key DK1 serves as the digital key DK_{OWN} while the vehicle setting PS1 serves as the vehicle setting PS_{OWN}. When the identification information of the digital key DK1 indicates a share user other than the owner of a vehicle, the digital key DK1 and the vehicle setting PS1 are saved as the guest setting GST. In this case, the digital key DK1 serves as the digital key DK_{SHR} while the vehicle setting PS1 serves as the vehicle setting PS_{SHR}. In this connection, the owner setting OWN is defined as a default setting in the DK_ECU 40.

The vehicle setting PS1 holds a plurality of setting information a, b, and c associated with a plurality of on-vehicle materials EQ. The setting information a refers to the state of setting of the power seat 61 to automatically adjust the power seat 61 at a position and an angle suited to user preference. The setting information b refers to the setting information of the electric mirror 62 to automatically adjust the electric mirror 62 at an angle suited to user preference. Since the power seat 61 and the electric mirror 62 are each automatically adjusted at the preferable position and the preferable angle after the user gets in a vehicle; hence, the user can concentrate on driving of the vehicle without having a discomfort feeling.

The IPC 50 is configured to exchange data with respect to a plurality of threads or a plurality of processes for controlling a plurality of on-board materials EQ. Data transfer based on the setting information c is carried out with respect to a process d relating to the ADAS 63, a process e relating to the HUD 64, and a process f relating to the Body 65. For example, the process d applies to the ADAS 63, which is configured to carry out a vehicle-speed-following cruise control and a line keeping assistance, a plurality of sensing data produced by an onboard camera, a millimeter wave radar, and a LiDAR (Laser Imaging Detection and Ranging). The process e provides the HUD 64, which is configured to display various pieces of information on the screen viewed by a driver, with visual information detected by an onboard camera and a car navigation system. The process f provides predetermined information to the Body 65 serving as other on-vehicle materials. For example, it is possible to appropriately manage the temperature or the humidity in a vehicle based on information about the temperature or the humidity outside the vehicle.

Fig. 3 illustrates the configuration of a digital key system 200 according to the second method. In Fig. 3, similar parts as shown in Fig. 2 are denoted by the same reference signs. The digital key system 200 includes a plurality of smart devices 20 (20a, 20b, and 20c) and an in-vehicle system 30B. The smart devices 20a, 20b, and 20c are associated with multiple users respectively. As described above, the applications AP (AP1, AP2, AP3) mounted on the smart devices 20 (20a, 20b, 20c) are configured to individually hold the digital keys DK (DK1, DK2, DK3) and the vehicle settings PS (PS1, PS2, PS3).

Specifically, the application AP1 of the smart device 20a holds the digital key DK1 and the vehicle settings PS1. The application AP2 of the smart device 20b holds the digital key DK2 and the vehicle setting PS2. The application AP3 of the smart device 20c holds the digital key DK3 and the vehicle settings PS3.

In the second method, after the door DR of a vehicle is unlocked, the in-vehicle system 30B shall receive a plurality of vehicle settings PS1, PS2, and PS3 from a plurality of smart devices 20a, 20b, and 20c through BLE, and then identify the vehicle setting PS corresponding to the identification number of the digital key DK used to turn on the power supply PW through an authentication procedure of NFC, thus applying the vehicle setting PS to the on-vehicle materials EQ.

In the in-vehicle system 30B, the receiver RX communicates with the smart devices 20a, 20b, and 20c to receive the vehicle settings PS1, PS2, and PS3. After that, the authentication unit AT authenticates the digital key DK1 of the smart device 20a through an authentication procedure of NFC, whereby after turning on the power supply, it is possible to identify the vehicle setting PS1 associated with the identification information of the digital key DK1. If the user of the smart device 20a is the owner of a vehicle, the digital key DK1 and the vehicle setting PS1 will be held as the owner setting OWN in the DK_ECU 40. In addition, if the smart devices 20b and 20c are carried by share users, the digital keys DK2, DK3 and the vehicle settings PS2, PS3 are held as the guest setting GST.

As described above, since the digital key DK1 associated with the user of the smart device 20a is authenticated through an authentication procedure of NFC, the vehicle setting PS1 will be applied to the on-vehicle materials EQ. That is, the same process as described in conjunction with Fig. 2 will be executed in Fig. 3; hence, descriptions thereof will be omitted here.

It is possible to assume a third method in addition to the first method and the second method. The third method is designed to certify the smart device 20, which is used to unlock the door DR of a vehicle and authenticated as a driver device, thus applying the vehicle setting PS associated with the digital key DK to the on-vehicle materials EQ through BLE.

In this connection, when the vehicle setting PS_{OWN} associated with the digital key DK_{OWN} possessed by the owner of a vehicle is held as the owner setting OWN, the other share user might drive the vehicle by applying the vehicle setting PS_{SHR} to the on-vehicle materials EQ using the digital key DK_{SHR}. After that, the share user will finish driving the vehicle and lock the door DR from the outside of a vehicle. In this case, the in-vehicle system 30 can be configured to restore the vehicle setting PS_{OWN} of the owner of a vehicle from the vehicle setting PS_{SHR}, which was previously applied to the on-vehicle materials EQ by the share user. Alternatively, when the user restarts driving the vehicle after finishing driving the vehicle, it is possible to automatically restore the vehicle setting PS_{OWN} of the owner of a vehicle from the vehicle setting PS_{SHR}, which was previously applied to the on-vehicle materials EQ by the share user, at the timing of an ignition-on (IG_ON) or a power-on of the power supply PW.

### [2] Second Embodiment

Fig. 4 is a block diagram illustrating the configuration of a digital key system 300 according to the second embodiment of the present invention. In Fig. 4, similar parts as shown in Fig. 1, Fig. 2, and Fig. 3 are denoted by the same reference signs. In the digital key system 300, the smart device 20 installing the application AP and the digital key DK thereon is connected to the CAN serving as an in-vehicle network of an in-vehicle system through communication; hence, various parts used for data transmission/reception between the smart device 20 and the in-vehicle system will be omitted here.

The digital key system 300 employs two types of vehicle settings A and B, which are installed on individual ECUs. In this connection, the vehicle setting A can be used as the vehicle setting PS_{OWN} ascribed to the owner of a vehicle while the vehicle setting B can be used as the vehicle setting PS_{SHR} ascribed to the share user of a vehicle. That is, the vehicle setting A is installed on a vehicle setting ECU_A 301 (hereinafter, referred to as "ECU_A 301") while the vehicle setting B is installed on a vehicle setting ECU_B 302 (hereinafter, referred to as "ECU_B 302").

The ECU_A 301 is connected to the CAN serving as an in-vehicle network. The ECU_B 302 is connected to the CAN by way of a meter display 304. The meter display 304 may display a message asking the user about whether to apply the vehicle setting B to the in-vehicle system or not. When the driver of a vehicle approves of applying the vehicle setting B, the vehicle setting B will be applied to the on-vehicle materials EQ.

An NFC antenna and/or a BLE antenna is mounted on the receiver RX to receive radio waves from the smart device 20. The authentication unit AT authenticates the digital key DK of the smart device 20. A privilege determination unit 305 is connected to the CAN through a setting change request ECU 303. The privilege determination unit 305 is synchronized with a condition determination unit 306 to determine whether a user of the smart device 20 has a privilege to change vehicle settings or not. The user of the smart device 20 is not always the owner of a vehicle and would possibly be a share user. For this reason, the condition determination unit 306 is configured to determine various conditions related to a power-on/off event, unlock/lock of doors, and an authentication position. When the user of the smart device 20 successfully turns on power in a vehicle, the privilege determination unit 305 gives the user a privilege to change vehicle settings. When the user of the smart device 20 successfully unlocks the door of a vehicle, the privilege determination unit 305 gives the user a privilege to change vehicle settings. Alternatively, when the user of the smart device 20 successfully carries out an authentication procedure of NFC at a close position to the vehicle, the privilege determination unit 305 gives the user a privilege to change vehicle settings. In addition, any person other than the user given the privilege to change vehicle settings is inhibited from changing vehicle settings. For example, it is possible to determine the valid period of a privilege to change vehicle settings in advance. Alternatively, it is possible to determine a predetermined time elapsed after the user gets in a vehicle as the valid period. The time elapsed until the user turns off power in a vehicle and locks the door of a vehicle after finishing driving the vehicle can be set as the valid period.

When a privilege to change vehicle settings is given to the user of the smart device 20, the setting change request ECU 303 accepts a request to change vehicle settings from the application AP of the smart device 20. When the vehicle setting A is set as the owner setting OWN serving as the default setting, the vehicle setting A will be applied to the on-vehicle materials EQ. Meanwhile, it is assumed that a share user may access a vehicle, acquire a privilege to change vehicle settings, and make a request to change the vehicle setting A to the vehicle setting B. In this case, the meter display 304 displays a message asking the user about whether to apply the vehicle setting B held in the ECU_B 302 to the on-vehicle materials EQ or not. Upon the user approval of applying the vehicle setting B, instead of the vehicle setting A, the vehicle setting B will be applied to the on-vehicle materials EQ.

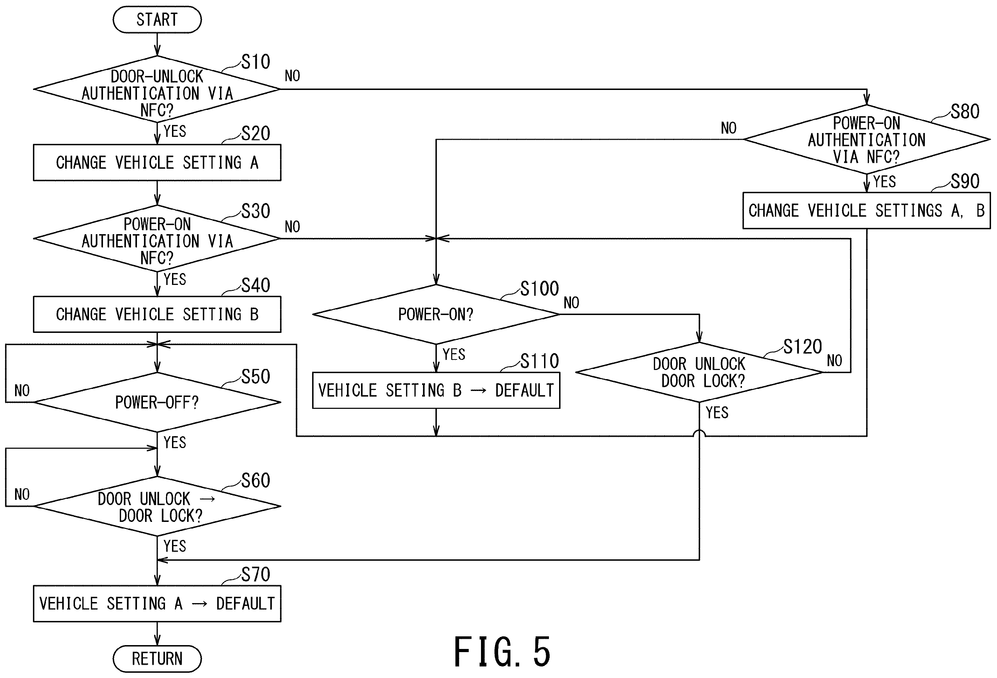

Fig. 5 is a flowchart illustrating the processing of the digital key system 300 according to the second embodiment of the present invention. The flowchart of Fig. 5 includes steps S10 through S120. First, when the user of the smart device 20 successfully unlocks the door of a vehicle through the authentication procedure of NFC, the digital key DK is authenticated so that the user is permitted to arbitrarily change the vehicle setting A (see steps S10 and S20). In addition, when the user successfully turns on power in a vehicle through the authentication procedure of NFC, the user is permitted to change the vehicle setting B (see steps S30 and S40). After that, when the user turns off power in a vehicle and locks the door(s) of a vehicle, the vehicle setting A held in the ECU_A 301 serving as the default setting is applied to the on-vehicle materials EQ (see steps S50, S60, and S70).

When the user fails to unlock the door of a vehicle through the authentication procedure of NFC in step S10, the flow proceeds to step S80. When the user successfully turns on power in a vehicle through the authentication procedure of NFC, the user is permitted to change the vehicle settings A and B (step S90). After that, the flow proceeds to step S50, wherein upon turning on power and locking doors of a vehicle, the vehicle setting A serving as the default setting will be applied to the on-vehicle materials EQ (see step S50, S60, and S70).

When the user fails to turn on power in a vehicle through the authentication procedure of NFC in steps S30 and S80, the flow proceeds to step S100. After that, when the user manually operates the start button to turn on power in a vehicle, the vehicle setting B held in the ECU_B 302 as the default setting will be applied to the on-vehicle materials EQ. After that, when the user turns off power in a vehicle and locks doors of a vehicle, instead of the vehicle setting B, the vehicle setting A will be applied to the on-vehicle materials EQ (see step S50, S60, and S70).

When the user does not turn on power in a vehicle in step S100, the flow proceeds to step S120. When the user locks the door of a vehicle in step S120, the flow proceeds to step S70 so that the vehicle setting A will be applied to the on-vehicle materials EQ as the default setting. In contrast, when the user does not lock the door of a vehicle, a series of steps S100 and S120 will be repeated until power is turned on in a vehicle.

In the flowchart of Fig. 5, although the user fails to unlock the door of a vehicle through the authentication procedure of NFC and also fails to turn on power in a vehicle through the authentication procedure of NFC, the vehicle setting B will be applied to the on-vehicle materials EQ as the default setting only when power is turned on in a vehicle (i.e., a second condition). After that, when the user turns off power in a vehicle and locks doors in a vehicle, the default setting is reset to the vehicle setting A rather than the vehicle setting B (i.e., a first condition). However, the flowchart of Fig. 5 is illustrative and not restrictive; hence, it is possible to change the default setting from the vehicle setting A to the vehicle setting B by other conditions than the above conditions.

Next, technical features and effects of the embodiments of the present invention will be described below.
(1) A digital key system (10) includes a mobile terminal (e.g., smart device 20) configured to hold a digital key (DK) showing an association between a user and a vehicle, and an in-vehicle system (30) configured to control a plurality of on-vehicle materials (EQ) included in the vehicle. The mobile terminal (20) is configured to store a set of the digital key (DK) and a vehicle setting (PS) used to define the state of setting with respect to a plurality of on-vehicle materials (EQ) and includes a vehicle setting change means (e.g., application AP) for permitting the user to change the vehicle setting (PS), and a transmitter means (TX) for transmitting the digital key (DK) and the vehicle setting (PS) to the in-vehicle system (30). The in-vehicle system (30) includes a receiver means (RX) for receiving the digital key (DK) and the vehicle setting (PS) transmitted from the transmitter means (TX) of the mobile terminal (20), an authentication means (AT) for authenticating the digital key (DK), and a vehicle setting applying means (33) for applying the vehicle setting (PS) to a plurality of on-vehicle materials (EQ) when the authentication means (AT) successfully authenticates the digital key (DK).

The user (e.g., the owner of a vehicle) may operate the mobile termina (20) before getting in a vehicle to generate the personalized vehicle setting (PS) and to arbitrarily change the vehicle setting (PS). The transmitter means (TX) of the mobile terminal (20) wirelessly transmits the digital key (DK) and the vehicle setting (PS) to the receiver means (RX) of the in-vehicle system (30). In the in-vehicle system (30), the vehicle setting (PS) generated or changed by the user is automatically applied to the on-vehicle materials (EQ). The mobile terminal (20) holds the encrypted digital key (DK) associated with the vehicle. When getting in a vehicle, the user may always bring the mobile terminal (20) into the vehicle for the sake of unlocking the door(s) of the vehicle using the digital key (DK) since the mobile terminal (20) is needed for user authentication. That is, the mobile terminal (20) holding the digital key (DK) is used to generate the vehicle setting and to complete changes, and therefore the user does not need to carry out troublesome operations to unlock the door(s) of the vehicle and to turn on power of the vehicle (or to start an engine).

(2) In the digital key system (10, 100), a near field communication is established between the transmitter means (TX) and the receiver means (RX) in close coordination with each other, wherein the authentication means (AT) may authenticate the digital key (DK) in success of the near field communication. The near field communication (NFC) can transmit information about the digital key (DK) to the receiver means (RX) of the in-vehicle system (30) when the transmitter means (TX) of the mobile terminal (20) is held over a predetermined part (e.g., a door) of a vehicle. The NFC protocol will achieve user authentication with a high degree of security.

(3) In the digital key system (10, 200, 300), when a plurality of digital keys (DK1-DK3) is used to make the vehicle setting (PS), a near field communication (BLE) is established between the transmitter means (TX) and the receiver means (RX) to transmit or receive a plurality of digital keys (DK1-DK3). The in-vehicle system (30, 30B) may include a privilege determination unit (305) configured to determine whether to give to the digital key (DK1) a privilege to change the vehicle setting (PS1) with the vehicle setting change means (AP1) when the digital key (DK1) among a plurality of digital keys (DK1-DK3) is used to unlock the door of the vehicle. The vehicle setting applying means (33) will apply the vehicle setting (PS1) associated with the digital key (DK1) given the privilege to a plurality of on-vehicle materials (EQ).

The vehicle may be shared by a plurality of users (e.g., the owner and any share user of the vehicle). In this case, the near field communication (BLE) will be executed between the transmitter means (TX) and the receiver means (RX). The BLE can achieve communication in a relatively long distance between transmitter and receiver. For this reason, any user can change the vehicle setting (PS) by operating the mobile terminal (20) in a remote place distanced farther than near field ranges (e.g., ranges of several meters). When the authentication means (AT) successfully authenticates the digital key (DK1) ascribed to a specific user among a plurality of digital keys (DK1-DK3), the vehicle setting applying means (33) will apply the vehicle setting (PS1) corresponding to the authenticated digital key (DK1) to the on-vehicle materials (EQ). That is, the user can individually change the vehicle setting (PS1), and therefore it is possible to improve convenience in the digital key system (10, 200, 300).

In the digital key system (10, 200, 300) described above, the in-vehicle system (30, 30B) includes the privilege determination means (305), and therefore it is possible to estimate a user holding the digital key (DK1) for successfully unlocking the door of the vehicle as a driver of the vehicle. This makes it possible to arbitrarily change the vehicle setting (PS1) associated with the digital key (DK1) given the privilege due to user authentication, thus automatically applying the vehicle setting (PS1) to the on-vehicle materials (EQ).

(4) In the digital key system (10, 200, 300), the receiver means (RX) may determine the position of the digital key (DK1) through the near field communication with the transmitter means (TX), wherein the privilege determination means (305) may determine whether to give the privilege to the digital key (DK1) based on the position. As the near field communication established between the transmitter means (TX) and the receiver means (RX), it is possible to use UWB to determine the position of the mobile terminal (20, 20a-20c).

(5) In the digital key system (10, 200), when the authentication means (AT) authenticates the digital key (DK1) received through the near field communication established between the transmitter means (TX) and the receiver means (RX) in close coordination with each other, the in-vehicle system (30, 30B) may identify the vehicle setting (PS1) using the identification number of the authenticated digital key (DK1) among a plurality of digital keys (DK1-DK3).

Some types of mobile terminals (20, 20a) can carry out the authentication procedure of NFC using the digital key (DK, DK1) but cannot transmit or receive the personalized digital information. For this reason, in the in-vehicle system (30B), the receiver means (RX) may receive a plurality of digital keys (DK1-DK3) and a plurality of vehicle settings (PS1-PS3) through BLE, and then the authentication means (AT) will carry out the authentication procedure of NFC to authenticate the vehicle setting (PS1) associated with the predetermined digital key (DK1). That is, it is possible to receive personalized digital information through BLE while appreciating merits of NFC, thus capacitating a specific user to arbitrarily change the vehicle setting (PS1).

(6) The authentication means (AT) may make a first authentication as to whether to succeed in unlocking the door of the vehicle or not and a second authentication as to whether to succeed in turning on power in the vehicle or not. The vehicle setting change means (AP) may change a first item among a plurality of items, which is defined in advance in relation to the state of setting of a plurality of on-vehicle materials (EQ) when the authentication means (AT) succeeds in the first authentication, while the vehicle setting change means (AP) may change a second item among a plurality of items when the authentication means (AT) succeeds in the second authentication.

The condition determination means (32, 306) of the digital key system (10, 300) has a plurality of conditions for applying the vehicle setting (PS) to the on-vehicle materials (EQ) due to user authentication. These conditions can be classified into the first authentication as to whether the user succeeds in unlocking the door of the vehicle using the digital key (DK) or not and the second authentication as to whether the user succeeds in turning on power in the vehicle or not. In this way, by setting two types of conditions for user authentication, it is possible to prevent unnecessary consumption of power due to a user's unexpected operation to inadvertently activate the function of changing the vehicle setting (PS).

As a plurality of items to be automatically set to the on-vehicle materials (EQ) as the vehicle setting (PS), it is possible to provide various types of settings such as ADAS settings, display settings, sound settings, air-conditioning settings, audio settings, seat settings, electricity-charge settings, on/off settings of lights, conditional settings for various types of vehicle controls, and brightness/illuminance settings. As ADAS settings, it is possible to provide collision mitigation braking (AEB, Autonomous Emergency Braking), lane departure prevention, inter-vehicle distance control (ACC, Adaptive Cruise Control), traffic sign recognition, vehicle departure notification, an HUD (Head-UP Display), skid prevention (ESC, Electronic Stability Control), brake control such as traction control, and a blind-spot monitor.

As functions to be preferably set before user starts to drive the vehicle, for example, it is possible to assume functions for controlling a seat position, a mirror angle, and a steering wheel position as a first item related to the first authentication accompanied with a user operation to unlock the door of a vehicle and to assume other functions as a second item related to the second authentication accompanied with another user operation to turn on power in a vehicle.

(7) In the digital key system (10, 100, 200), the receiver means (RX) may determine the position indicating whether the digital key (DK) is put inside or outside the vehicle through near field communication with the transmitter means (TX), wherein when the digital key (DK) is put inside the vehicle, the vehicle setting change means (AP) may change a first item among a plurality of items defined in advance in relation to the state of setting of a plurality of on-vehicle materials (EQ), and wherein when the digital key (DK) is put outside the vehicle, the vehicle setting change means (AP) may change a second item among a plurality of items. When UWB is used as a communication method between the transmitter means (TX) and the receiver means (RX), it is possible to estimate the position of the mobile terminal (20) responsive to radio field strength. For this reason, it is possible to differentiate the vehicle setting (PS) for the digital key (DK) located inside the vehicle and the vehicle setting (PS) for the digital key (DK) located outside the vehicle. Therefore, it is possible to limit the number of items related to the vehicle setting (PS), which can be changed by the user who operates the mobile terminal (20) outside the vehicle, thus preventing the vehicle setting (PS) from being excessively changed outside the vehicle.

(8) In the in-vehicle system (30) of the digital key system (10, 200, 300), the vehicle setting (PS) associated with the digital key (DK) is used as the default setting (e.g., vehicle setting A) with respect to a plurality of on-vehicle materials (EQ), even when the other vehicle setting (e.g., vehicle setting B) is applied to a plurality of on-vehicle materials (EQ) using the other digital key among a plurality of digital keys, the in-vehicle system (10, 200, 300) may restore the default setting (e.g., vehicle setting A) with respect to a plurality of on-vehicle materials (EQ) upon satisfying the predetermined condition.

(9) The predetermined condition may be to turn off power after finishing driving the vehicle adapted to the other vehicle setting (e.g., vehicle setting B) associated with the other digital key, or to turn on power using the digital key for restarting driving the vehicle.

User authentication is not always carried out using the digital key (DK). Since the authentication of the digital key (DK) and the application of the vehicle setting (PS) are tied with each other, the vehicle setting (PS) would not be applied to the on-vehicle materials (EQ) due to a failure of authenticating the digital key (DK). For this reason, it is possible to improve convenience of the digital key (DK) for each user by restoring the default setting (e.g., vehicle setting A) determined in advance without inadvertently applying the vehicle setting (e.g., vehicle setting B) that was used in a previous drive cycle of a vehicle. As the default timing, it is possible to set the timing of turning off power after finishing driving the vehicle. When a power-on event is set to a condition for restoring the default setting, the power-on event for starting the next drive cycle of a vehicle.

(10) The digital key (DK) may be an owner key (DK_{OWN}) ascribed to the owner of a vehicle while the other digital key may be a share key (DK_{SHR}) ascribed to a share user of the vehicle, wherein the default settings (PS_{OWN}) may be defined in relation to the owner key (DK_{OWN}). When priority is given to multiple digital keys (DK) in advance, the digital key having the highest priority may be set as the owner key (DK_{OWN}) held by the owner of the vehicle. After the other share user finishes driving the vehicle, the vehicle setting (PS_{SHR}) of the share user is returned to the default setting (PS_{OWN}) associated with the owner key (DK_{OWN}). For this reason, it is possible to automatically apply the default setting (PS_{OWN}) to the on-vehicle materials (EQ) without causing the owner of the vehicle to feel annoyance.

(11) The mobile terminal (20) may include an inhibition means configured to inhibit the operation of the vehicle setting change means (AP) by the user during driving of a vehicle, and a notification means configured to notify that the inhibition means inhibits the operation of the vehicle setting change means (AP). That is, the inhibition means may inhibit the vehicle setting (PS) from being changed by the user who operates the mobile terminal (20) during driving of the vehicle to thereby prevent the vehicle setting (PS) already applied to the on-vehicle materials (EQ) from being inadvertently changed during driving of the vehicle, which would contribute to safety driving of the vehicle. In this connection, the inhibition means can be set as a software logic described in the application (AP).

For example, a touch panel display or a speaker of the mobile terminal (20) may be used as the notification means. Alternatively, it is possible to use a speaker or a display of a car navigation system mounted on the vehicle. When the predetermined message is displayed on the display, the user can easily recognize inhibition about any change of the vehicle setting (PS). In addition, it is possible to prevent the vehicle setting (PS) from being unexpectedly changed by mischief of any passenger in the vehicle, and therefore it is possible to prevent the driver's concentration on the driving operation from being broken.

(12) The in-vehicle system (30, 30A, 30B) may include a determination means configured to allow the user to selectively determine whether to accept any change in the vehicle setting (PS) with the vehicle setting change means (AP) or not. In this case, when the user selectively determines to accept any change in the vehicle setting with the determination means, the vehicle setting applying means (33) may make any change in the vehicle setting (PS) applied to a plurality of on-vehicle materials (EQ). It is possible to install an onboard HMI (Human-Machine Interface) on the vehicle so that the user can indicate his/her intention whether to accept any change of the vehicle setting (PS) or not by operating a switch or a touch button. For example, the user may selectively accept any change in the vehicle setting (PS) upon receiving an inquiry (showing "Yes" or "No") about whether to reflect any change in the vehicle setting (PS) displayed on the meter display (304). In this connection, it is not necessary to change all the items of the vehicle setting (PS), whereby if partially changed items be included in the vehicle setting (PS), it is possible to apply to the user an option whether to accept the changed item(s) or not. Therefore, the user can confirm the necessity/unnecessity as to whether to apply any change made by the user with the mobile terminal (20) to the vehicle setting, thus improving convenience of the vehicle setting (PS), which would contribute to the safety driving of the user.

(13) A plurality of items may be defined in advance in the vehicle setting (PS) in relation to the state of settings of a plurality of on-vehicle materials (EQ), wherein a recommendation means is provided to perform machine learning of the past history related to any change in the vehicle setting (PS) with the vehicle setting change means (AP) according to a tendency, an attribute, or an environment of the user, to select a changeable item of the vehicle setting (PS) inferred by machine learning from among a plurality of items, and to recommend the changeable item to the user.

The mobile terminal (20) may install artificial intelligence (AI) or a machine learning model as the application (AP) thereon. The machine learning model is configured to learn attributes (e.g., ages and sexes) of multiple users, external environments (e.g., temperature, humidity, weather, and seasons) of the vehicle, and the tendency such as the behavior of operating the vehicle as the past history. Alternatively, the machine learning model may learn the modification history of the vehicle setting (PS) changed by the user as the past history. The machine learning model may speed up user's modification of the vehicle setting (PS). For this reason, it is possible to shorten the time required to change the vehicle setting (PS). In addition, some users unaccustomed to changing the vehicle setting (PS) using the digital key (DK) can change vehicle settings by using the mobile terminal (20) installing the machine learning model thereon without making any mistake, and therefore it is possible to prevent the user from feeling uneasiness in changing the vehicle setting (PS).

Various embodiments of the present invention have been described above; however, those embodiments show illustrative examples and do not intend to limit the scope of the invention. These novel embodiments can be realized by any other form, and therefore various omissions, substitutions, and modifications can be made without departing from the essence of the invention. These embodiments and modifications are covered by the gist and the scope of the invention and included in the scope of the invention as defined in claims and equivalents thereof.

### REFERENCE SIGNS LIST

10, 100, 200, 300 digital key system
20, 20a, 20b, 20c smart device
30, 30A, 30B in-vehicle system
31 vehicle access unit
32 condition determination unit
33 vehicle setting applying unit
40 digital key ECU (DK_ECU)
50 IPC
61 power seat
62 electric mirror
63 ADAS
64 HUD
65 Body
301 vehicle setting ECU_A
302 vehicle setting ECU_B
303 setting change request ECU
304 meter display
305 privilege determination unit
306 condition determination unit
AP, AP1, AP2, AP3 application
AT authentication unit
DK, DK1, DK2, DK3 digital key
DR door
EN engine
EQ on-vehicle materials
GST guest setting
OWN owner setting
PS, PS1, PS2, PS3 vehicle setting
PW power supply
RX receiver
TX transmitter

## Claims

1. A digital key system comprising:
a mobile terminal configured to hold a digital key showing an association between a user and a vehicle; and
an in-vehicle system configured to control a plurality of on-vehicle materials mounted on the vehicle,
wherein the mobile terminal is configured to store a set of the digital key and a vehicle setting used to define a state of setting with respect to the plurality of on-vehicle materials and comprises a vehicle setting change means for permitting the user to change the vehicle setting and a transmitter means for transmitting the digital key and the vehicle setting to the in-vehicle system, and
wherein the in-vehicle system comprises a receiver means for receiving the digital key and the vehicle setting transmitted from the transmitter means of the mobile terminal, an authentication means for authenticating the digital key, and a vehicle setting application means for applying the vehicle setting to the plurality of on-vehicle materials when the authentication means successfully authenticates the digital key.

2. The digital key system according to claim 1, wherein a near field communication is established between the transmitter means and the receiver means in close coordination with each other, and wherein the authentication means is configured to authenticate the digital key in success of the near field communication.

3. The digital key system according to claim 1 or claim 2, wherein when a plurality of digital keys is used to make the vehicle setting, a near field communication is established between the transmitter means and the receiver means to transmit or receive the plurality of digital keys,
wherein the in-vehicle system includes a privilege determination means configured to determine whether to give to the digital key a privilege to change the vehicle setting by way of the vehicle setting change means when the digital key among the plurality of digital keys is used to unlock a door of the vehicle, and
wherein the vehicle setting applying means is configured to apply the vehicle setting associated with the digital key given the privilege to the plurality of on-vehicle materials.

4. The digital key system according to claim 3, wherein the receiver means is configured to determine a position of the digital key through the near field communication with the transmitter means, and wherein the privilege determination unit is configured to determine whether to give the privilege to the digital key based on the position.

5. The digital key system according to claim 3, wherein when the authentication means authenticates the digital key received through the near field communication established between the transmitter means and the receiver means in close coordination with each other, the in-vehicle system is configured to identify the vehicle setting using an identification number of the digital key authenticated among the plurality of digital keys.

6. The digital key system according to any one of claim 2 to claim 5, wherein the authentication means is configured to make a first authentication as to whether to succeed in unlocking a door of the vehicle or not and a second authentication as to whether to succeed in turning on power in the vehicle or not,
wherein when the authentication means succeeds in the first authentication, the vehicle setting change means is configured to change a first item among a plurality of items, which is defined in advance in relation to the state of setting of the plurality of on-vehicle materials, and
wherein when the authentication means succeeds in the second authentication, the vehicle setting change means is configured to change a second item among the plurality of items.

7. The digital key system according to any one of claim 2 to claim 5, wherein the receiver means is configured to determine a position indicating whether the digital key is put inside or outside the vehicle through the near field communication with the transmitter means,
wherein when the digital key is put inside the vehicle, the vehicle setting change means is configured to change a first item among a plurality of items, which is defined in advance in relation to the state of setting of the plurality of on-vehicle materials, and
wherein when the digital key is put outside the vehicle, the vehicle setting change means is configured to change a second item among the plurality of items.

8. The digital key system according to any one of claim 3 to claim 7, wherein the vehicle setting associated with the digital key is used as a default setting with respect to the plurality of on-vehicle materials in the in-vehicle system, and wherein even when other vehicle setting is applied to the plurality of on-vehicle materials using other digital key among the plurality of digital keys, the in-vehicle system is configured to restore the default setting with respect to the plurality of on-vehicle materials upon satisfying a predetermined condition.

9. The digital key system according to claim 8, wherein the predetermined condition is to turn off power after finishing driving the vehicle adapted to the other vehicle setting associated with the other digital key, or to turn on power using the digital key for restarting driving the vehicle.

10. The digital key system according to claim 8, wherein the digital key is an owner key ascribed to an owner of the vehicle while the other digital key is a share key ascribed to a share user of the vehicle, and wherein the default setting is defined in relation to the owner key.

11. The digital key system according to any one of claim 3 to claim 10, wherein the mobile terminal comprises an inhibition means configured to inhibit an operation of the vehicle setting change means by the user during driving of the vehicle, and
a notification means configured to notify that the inhibition means inhibits the operation of the vehicle setting change means.

12. The digital key system according to any one of claim 3 to claim 11, wherein the in-vehicle system comprises a determination means configured to allow the user to selectively determine whether to accept a change in the vehicle setting with the vehicle setting change means or not, and
wherein when the user selectively determines to accept the change in the vehicle setting with the determination means, the vehicle setting applying means is configured to make the change in the vehicle setting applied to the plurality of on-vehicle materials.

13. The digital key system according to any one of claim 3 to claim 12, wherein a plurality of items is defined in advance in the vehicle setting in relation to the state of setting of the plurality of on-vehicle materials, comprising a recommendation means configured to perform machine learning of a past history related to a change in the vehicle setting with the vehicle setting change means according to a tendency, an attribute, or an environment of the user, to select a changeable item of the vehicle setting inferred by the machine learning from among the plurality of items, and to recommend the changeable item to the user.
